(19) Europäisches Patentamt
European Patent Office
Office européen des brevets

(11) **EP 1 846 526 B1**

(12) **EUROPEAN PATENT SPECIFICATION**

(45) Date of publication and mention of the grant of the patent:
**01.03.2017 Bulletin 2017/09**

(21) Application number: **06706628.2**

(22) Date of filing: **31.01.2006**

(51) Int Cl.:
*C09D 175/16* (2006.01)       *C09D 175/04* (2006.01)
*C08G 18/67* (2006.01)        *C08G 18/32* (2006.01)
*C08G 18/34* (2006.01)

(86) International application number:
**PCT/EP2006/000966**

(87) International publication number:
**WO 2006/082080 (10.08.2006 Gazette 2006/32)**

(54) **POWDER COATINGS**

PULVERBESCHICHTUNGEN

REVETEMENTS EN POUDRE

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.02.2005 GB 0502085**

(43) Date of publication of application:
**24.10.2007 Bulletin 2007/43**

(73) Proprietor: **DSM IP Assets B.V.**
**6411 TE Heerlen (NL)**

(72) Inventors:
• **ATTENBURROW, Geoffrey**
**Moulton Park,**
**Northampton, NN2 7AL (GB)**
• **DING, Jifeng**
**M1 5GD, Manchester (GB)**
• **JIANG, Xingsheng**
**Dongli District,**
**150040 Harbin (CN)**
• **LIPS, Priscilla, Amber, Majella**
**7443 LT Nijverdal (NL)**

(74) Representative: **Diakoumakos, Konstantinos**
**DSM Intellectual Property**
**P.O. Box 4**
**6100 AA Echt (NL)**

(56) References cited:
**EP-A- 0 677 544**      **EP-A1- 2 277 985**
**WO-A-92/14770**       **US-A- 5 538 759**
**US-A- 5 770 651**      **US-A- 5 811 198**
**US-A1- 2012 073 186**   **US-B1- 6 555 597**

**Description**

The present invention relates to oligomers and/or polymers and compositions comprising them, which compositions are suitable for powder coating and methods of making them. These oligomers and/or polymers and compositions are particularly, but not exclusively, suited to be cured by radiation and/or heat. The invention also relates to coatings, coated substrates and to methods of making them.

This invention particularly relates to low baking temperature radiation curable and/or thermally curable oligomers and/or polymers suitable for powder coating and compositions comprising them, which are especially suitable for heat-sensitive and/or flexible substrates. More specifically, the invention relates to crystalline or semi-crystalline oligomer or polymer that when subject to heat melts and flows-out at a temperature between 60°C and 180°C, more preferably between 60° and 140 °C, and when subsequently subjected to curing in the molten state by radiation and/or thermal energy, will give a coating having a highly flexible, either completely amorphous low glass transition temperature ($T_g$) polymeric matrix or highly flexible, low degree of crystallinity, low $T_g$ polymeric matrix. The invention also relates to compositions suitable for powder coating that are based on at least one of such a crystalline or semi-crystalline oligomer and/or polymer.

A powder coating composition is a solid coating composition in the form of, at room temperature dry, free flowing and fine powder. In so far as possible, each particle of the solid coating composition should contain all ingredients of the composition. Well mixed minor components such as for example colorants, flow agents and crosslinkers, are present in a matrix of the binder, consisting of the major film-forming components. Generally the powder coating composition is applied to the surface of a substrate and fused to form a continuous film at an elevated temperature that is often referred to as "baking" or "stoving" temperature. The baking temperature is typically in the range of 160 - 200°C for thermal curing formulations, however it can deviate from this range depending on the circumstances.

The distinct advantages of powder coatings over conventional liquid systems are (see, for examples, Misev, T.A.," Powder Coatings ", John Wiley and Sons Ltd, Chichester (1991); Howard, J., Surface Coating International (1995), 417):

   1. Reclaiming powders during application is possible which leads to almost 100% utilization of the coating composition materials
   2. No emission of volatile organic compounds (VOCs)
   3. An even coat can be achieved with one spray, without the need for extensive and overlapping spraying
   4. Cost per unit area is cheaper than conventional methods

Powder coatings are therefore an economic, energy-efficient, and ecological or environmentally friendly surface coating technology. They are also clean and convenient to use, since they are in dry solid form.

Despite powder coatings' many advantages, they are typically used for coating metals and are generally not employed in coating heat-sensitive substrates such as leather, wood and plastics, which demand lower baking and/or curing temperatures of preferably below 120°C. However, lower curing temperatures are not possible with traditional thermal curable powders. This is because reactive crosslinking agents for low curing temperatures will adversely affect the shelf-life of powders, and adversely affect the flow due to a too fast viscosity increase during the baking and curing process. As the flow is not optimal under these conditions the smoothness of the final coating is adversely affected and also not optimal. To improve the flow, the prior art described the use of blocked crosslinking agents such as for example blocked isocyanates (see for example DE-2.542.191, dated 1974). These blocked isocyanates delay the crosslinking reaction by increasing the temperature threshold for the isocyanates being chemically reactive, thus allowing the coating material to have sufficient time to flow out before the viscosity becomes too high due to the crosslinking reactions.

Low temperature ultraviolet (UV) radiation curable powders have been proposed for coating heat-sensitive substrates (EP0636669, US4129488, US4163810, US5922473, US6005017, US6017640, US6106905). Since the crosslinking reactions are not initiated thermally but only by exposure to UV radiation, the flow out step upon heating is separated from the curing or crosslinking reaction step. Furthermore, UV curing is very fast (in the order of seconds), there is no need for prolonged heating for complete cure. Consequently for UV curable powders, heating is only required to sufficiently flow out the powders into a continuous, smooth molten film prior to UV curing, at a temperature above glass transition temperature ($T_g$) or melt temperature. This allows the powders to be formulated for baking temperatures lower than the thermal curing systems.

Current powder coatings are based on amorphous polymers, or at least amorphous polymers as the base resin of the system. There are two drawbacks for such powder coating systems. The first is that the film formed is inherently hard, not flexible, because a high $T_g$ polymer (usually above 50°C) is required to give the powder the properties of resistance to blocking (giving a free flowing fine powder) during storage at room temperature. The second is poor flow properties.

To improve the flow properties of the formulations containing amorphous polymers, crystalline polymers may be incorporated in the formulation of UV-curable powder coatings (EP0636669, US6790876, US6541535, US5763099, US5811198). The use of crystalline polymers sometimes produces film hazing. To overcome the hazing and mottling problem, the level of crystalline resins is usually limited to below 10% (wt) of the resin system, at the expense of poor flow and consequently requiring a higher baking temperature. A recrystallization or haze inhibitor may be employed to reduce or eliminate hazing (US 6136882).

Wenning disclosed a UV-curable powder coating compositions based on polyurethane acrylate (US6747070). The resin is a polyurethane based on polyester backbone and terminal acrylate group. In the compositions, the major binder resin was amorphous, 60-90% by weight, although crystalline resin(s), 10-40% by weight, was also incorporated in the formulations.

Hall disclosed a powder coating composition (US6525161) comprising semi-crystalline polyurethane acrylate resins. In this system, the UV-curable functional group was introduced by monohydroxy acrylate monomers, such as hydroxyethyl acrylate. The prepared resins are end capped with acrylate groups.

Li *et al* [C. Li, R. M. Nagarajan, C. C. Chiang and S. L. Cooper, *Polym. Engineering Sci.,* 26, 20 (1986)] and Couvret *et al* [D. Couvret, J. Brosse, S. Chevalier and J. Senet, *Eur. Polym. J.,* 27(2), 193 (1991)] published their work on introducing pendant acrylate groups in side positions to the backbone of oligomers or polymers. However their work on introducing pendant functional groups was neither in the context of powder coatings, nor related to crystalline oligomers/polymers.

It would be desirable to have oligomers or polymers suitable for powder coating compositions which can be used for coating highly flexible and/or heat-sensitive substrates, particularly at low temperatures, but which are nevertheless stable on storage. Hitherto, nor the oligomer, nor the polymer, nor the powder coating composition has been provided.

With "heat-sensitive substrate" is here and hereinafter meant that substrate that, because of its nature, will partially or fully deteriorate under the influence of heat. Therefore treatment of such a substrate generally requires temperatures below 130°C, preferably below 110°C. Examples of heat-sensitive substrates include leather, artificial leather, textile, (flexible) plastic, paper, cardboard, wood, wood composites such as for example particle board and high, medium or low density fibre board.

Examples of highly flexible substrates are metal wire, rubber and rubber-like materials.

In a broad aspect, the invention as described in the claims and as disclosed in the description, provides a crystalline or semi-crystalline oligomer or polymer suitable for a powder coating composition which oligomer or polymer upon curing by radiation and/or thermal energy converts into a flexible polymer matrix having no or reduced crystallinity. The nature of the polymer matrix that is obtained after curing the oligomer or polymer according to the invention makes the invention especially suitable to be applied on flexible substrates. However the invention is not limited to the use on flexible substrates, it can also very suitably be used on more rigid substrates.

Here and hereinafter with "polymer matrix" is meant the network that is obtained after curing or crosslinking the crystalline or semi-crystalline oligomer or polymer according to the invention in the presence of only the strictly necessary other chemicals. So for example when the polymer matrix will be obtained starting from an oligomer or polymer that is equipped with groups suitable for UV-curing, at least a photo-initiator is a "strictly necessary other chemical". When the polymer matrix will be obtained starting from an oligomer or polymer that is equipped with groups suitable for thermal curing, at least a crosslinker is a "strictly necessary other chemical". It is clear that for example a pigment or colorant is not a "strictly necessary other chemical" in this sense.

In the context of this invention with "flexible polymer matrix" or "flexible polymer" or "flexible coating" is meant a matrix or polymer or coating, as the case may be, with a flexibility of at least 10%, preferably at least 20%, more preferably at least 50% and most preferably at least 100%. The flexibility is determined as the tensile elongation at break according to the ISO norm 527, however using a tensile test speed of 100 mm/min and a maximum tensile distance of 50 mm. In the case of the matrix and the coating the determination is performed on an unpigmented matrix or coating. The flexible polymer matrix or flexible polymer was tested by use of the Stable Micro System (SMS) tensile tester. The tensile strength was calculated as follows:

$$\text{Tensile Strength} = \frac{\text{maximum breaking load}}{\text{cross sectional area}}$$

wherein: cross sectional area = mean width x mean thickness
And the tensile elongation at break was calculated as follows:

$$\text{Percentage elongation} = \frac{\text{final free length - initial free length}}{\text{initial free length}} \times 100\%$$

The invention especially relates to a crystalline or semi-crystalline oligomer or polymer suitable for a powder coating composition which upon curing converts into a flexible thermoset polymer matrix having no or reduced crystallinity.

In a further aspect, the invention relates to crystalline or semi-crystalline oligomer and/or polymer that when subject to heat melts and flows-out at a low temperature between 60°C and 180°C, more preferably between 60° and 140°C, and when subsequently subjected to curing in the molten state by radiation and/or thermal energy, will give a coating having a highly flexible, either completely amorphous low glass transition temperature ($T_g$) polymeric matrix or highly flexible low degree of crystallinity, low $T_g$ polymeric matrix which oligomer or polymer has a melting temperature of 160°C or below, and which upon curing provides a flexible polymer matrix having a $T_g$ of 30°C or less. Preferably, the melting temperature is below 120°C. Preferably the $T_g$ is less than 20°C. More preferably, the melting temperature is below 120°C, and the $T_g$ is less than 20°C. Preferably the oligomer or polymer can be cured by UV-radiation or thermally.

In one aspect, the invention provides a crystalline or semi-crystalline oligomer or polymer suitable for a powder coating composition, wherein the oligomer or polymer comprises branched chain molecules containing along the chain of the oligomer or polymer randomly distributed pendant functional groups being such as to provide, upon curing of the oligomer or polymer, further polymerization and/or crosslinking of the oligomer or polymer to give a flexible polymer matrix having no or reduced crystallinity. The oligomer or polymer is a polyurethane or a polyester.. Pendant groups which are inert to curing may also be present.

In another aspect, the invention provides a composition suitable for a powder coating comprising monomers for a crystalline or semi-crystalline oligomer or polymer, and one or more copolymerisable monomers, at least one monomer being such as to provide, upon curing the composition, further polymerization and/or crosslinking of the resin to give a flexible polymer having no or reduced crystallinity.

In a preferred aspect, the invention provides a composition suitable for a powder coating comprising monomers for a crystalline or semi-crystalline polyurethane or polyester, and one or more copolymerisable monomers at least one copolymerisable monomer having at least two functional or reactive groups and at least one branched group, the copolymerisable monomer being such as to provide, upon curing the composition, further polymerization and/or crosslinking of the oligomer or polymer to give a flexible polymer matrix having no or reduced crystallinity.

In a preferred aspect there is provided a crystalline or semi-crystalline polyurethane suitable for powder coating composition, which crystalline or semi-crystalline polyurethane comprises units derived from a diisocyanate, a linear diol and one or more branched diols. Upon curing the crystalline or semi-crystalline polyurethane, further polymerization and/or crosslinking occurs resulting in a flexible polymer matrix having no or reduced crystallinity. Preferably the oligomer and/or polymer is chosen so that the resulting flexible polymer matrix having no or reduced crystallinity has a low $T_g$. Preferably the $T_g$ is below 30°C, more preferably the $T_g$ is 10°C or below, even more preferably 0°C or below.

In another preferred aspect, there is provided a crystalline or semi-crystalline polyester suitable for a powder coating composition, which crystalline or semi-crystalline polyester comprises units derived from an aliphatic or aromatic dicarboxylic acid or their functional derivatives such as aliphatic or aromatic acid halides, acid anhydrides or esters; a linear diol, and one or more branched diols. As above, curing results in a flexible polymer matrix having no or reduced crystallinity.

The invention also provides a composition suitable for a powder coating comprising one or more crystalline or semi-crystalline oligomers or polymers wherein the or each oligomer or polymer is linear and comprises at least two functional end groups, wherein said composition upon curing converts into a flexible polymer matrix having no or reduced crystallinity. For example, two different oligomers and/or polymers, having different melting points, may be used.

The invention includes both the oligomer or polymer as described herein and a coating composition suitable as a powder coating composition comprising at least one oligomer or polymer of the invention. The compositions according to the invention will typically contain at least one further auxiliary component usual for coating compositions, as will be clear to those skilled in the art. Examples of auxiliary components are fillers, degassing agents, dispersing agents, flow control agents, flow-promoting agents, rheology-influencing agents, anti- or de-foaming agents, (light)stabilizers, thickeners, wetting agents, anti-skinning agents, anti-sedimentation agents, anti-flocculation agents, flatting agents, adhesion promoters, structural additives, gloss-enhancing additives and catalysts. Suitable fillers are for example metal oxides, silicates, carbonates and sulphates. Primary and/or secondary antioxidants, UV stabilizers for example quinones, (sterically hindered) phenolic compounds, phosphonites, phosphites, thioethers and HALS compounds (hindered amine light stabilizers) can for example be used as stabilizers. Examples of degassing agents are benzoin and cyclohexane dimethanol bisbenzoate. The flow agents include for example polyalkylacrylates, fluorohydrocarbons and silicone fluids. Other suitable additives are for example additives for improving tribocharging, for example sterically hindered tertiary amines that are described in EP0371528B. Preferably the at least one auxiliary component usual for coating compositions is chosen from the list comprising crosslinking agent, photoinitiator, colorant or flow agent. Optionally other components may be present in the composition according to the invention next to the oligomer or polymer and the auxiliary component. The components, making up the composition according to the invention, are preferably so chosen to give the total composition a glass transition temperature below room temperature. Preferably the composition is a powder coating composition.

The oligomers and/or polymers that are suitable to be incorporated into a coating composition according to the invention can, depending on the functional groups that are present within them, be cured by techniques well-known to the man skilled in the art. Examples of curing techniques are, thermal curing (for example by IR radiation) or radiation curing (for example by UV or electron beam (EB) radiation). The various curing techniques are well-known to the man skilled in the art. The apparatus for these curing techniques is commercially available.

The oligomers and/or polymers suitable for a powder coating composition and the composition of the present invention are thermally or radiation curable, preferably UV radiation curable.

The compositions of the invention are stable on storage and show no, or substantially no, blocking upon storage, even for prolonged periods. Preferably, the compositions have a melting temperature of from 60°C to 180°C, more preferably between 60°C to 140°C.

In a further aspect, there is provided a process to provide a substrate with a flexible coating which process comprises the following steps:

1.    providing a coating composition according to the invention;
2.    applying the coating composition onto the surface of the substrate
3.    subject the coated substrate to heat causing the coating composition to melt and flow-out at a temperature between 60°C and 180°C followed by
4.    curing in the molten state by radiation and/or thermal energy.

The process according to the invention is especially suitable for providing a flexible and/or heat-sensitive substrate with a flexible coating. The coating composition is preferably a powder coating composition. Curing of the molten coating composition on the substrate is preferably performed by UV-radiation and/or heat. As the man skilled in the art will understand the process according to the invention is evenly suitable for coating the whole surface of the substrate as well as only a part of it.

The invention also provides a process for coating a flexible or heat-sensitive substrate, which process comprises providing a powder coating composition according to the invention and powder coating said substrate with said composition.

The invention includes the use of the coating composition according to the invention. Preferably the coating composition is used for powder coating flexible or heat-sensitive substrates. Preferably the coating composition is used for coating leather or artificial leather.

The invention also provides a substrate, preferably a flexible and/or heat-sensitive substrate, coated with a coating composition according to the invention. The substrate is preferably coated with a powder coating composition.

By a flexible polymer matrix having no or reduced crystallinity, we mean one where the crystallinity has been fairly substantially reduced with respect to the crystallinity of the initial crystalline or semi-crystalline oligomer or polymer. Suitably, the flexible polymer matrix has a crystallinity of about 20% or less, preferably lower than 20% as further described herein. Substantially non-crystalline or amorphous polymers are preferred.

The degree of crystallinity is determined by Differential Scanning Calorimetry (DSC). The degree of crystallinity, C, of a semi-crystalline polymer is calculated as follows:

$$C = \frac{\Delta H}{\Delta H_{100\%}} \cdot 100\%$$

where

$\Delta H$ is the measured heat of fusion [J/g] from DSC
$\Delta H$ 100% is the heat of fusion of the corresponding 100% crystalline polymer [J/g] given by literature, see for example W.J. Macknight, M. Yang and T. Kajiyama. ACS Polym. Preprints, 1968 (9), pp.860-865 and the references cited therein)

The DSC instrument is a DSC822e equipped with a thermal analysis data station. The computer to control DSC module has been set up with Windows NT operation system, and installed with professional STARe Software for DSC measurement provided by Mettler Toledo. Mercury and indium were used to calibrate the instrument temperature and energy settings. DSC sample masses were between 9-13 mg and were analyzed in $40\mu$ standard aluminum pan. The data were collected from -50 to 150 °C at a heating rate of 10 °C/min under a nitrogen purge. The DSC thermograms were normalized to equivalent sample weight for comparison. Crystallization, melting points and glass transition temperatures were determined using the DSC software.

The glass transition temperature of the oligomer or polymer was determined by the above described DSC instrument and method. The glass transition temperature was calculated automatically in STARe midpoint. The STARe midpoint is defined as the intersection point of the bisector of angle with the measuring curve. This bisector of angle goes through the intersection point of the baselines before and after transition.

The present invention provides a storage stable powder coating composition that will give a (highly) flexible polymer matrix, unlike existing powder coating compositions. The powder coating compositions provided herein are capable of flow-out and curing at low temperatures and can therefore be used for coating for example heat-sensitive substrates.

The invention relates to a powder coating composition that is based on at least one crystalline or semi-crystalline polymer or oligomer which has a flexible backbone chain (i.e. low $T_g$) in the amorphous state. It differs from the existing powder coating compositions which are based on high $T_g$ (typically above 50°C) amorphous polymers and wherein crystalline polymers or crystalline crosslinking agents are added for the benefit of improving flow out.

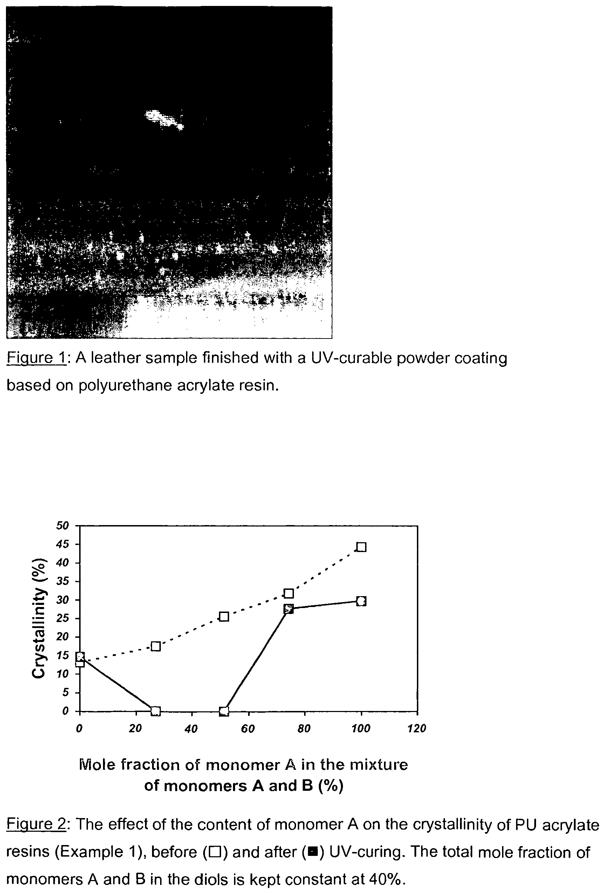

The present invention makes use of crystalline or semi-crystalline oligomers and/or polymers which can be further modified to alter the overall properties. The oligomers and/or polymers are solids suitable for a powder coating composition and which oligomers and/or polymers provide the powder with sufficient storage stability (i.e. without blocking or sticking together). However, upon melting and flow out, typically at a temperature between 60-180 °C, preferably less than 140 °C and curing in the molten state at low temperatures, the crystalline or semi-crystalline oligomer or polymer will further polymerize or react, leading to a crosslinked network polymer (also referred to as "polymer matrix"), and turn into a low degree of crystallinity or amorphous polymer matrix of low $T_g$. The $T_g$ is preferably below room temperatures, more preferably 10 °C below room temperature, even more preferably 20 °C below room temperature. With "room temperature" is generally meant a temperature in the range of 20-25 °C, more specifically 21°C). The coating is highly flexible, as shown by Figure 1. The coating according to the present invention differs from existing powder coatings that tend to be rigid because of the high $T_g$ (typically above 50°C) of the amorphous polymers employed. The present powder coating composition is preferably UV-curable but may also be cured thermally depending on the functional groups incorporated in the oligomer and/or polymer. It is also possible to apply UV-and thermal curing in combination.

The present powder coating composition is suitable for coating heat-sensitive and/or highly flexible substrates. Figure 1 shows a bent leather sample coated with a powder coating of the invention which was cured by UV-radiation. The flexibility of the coating is evident when the sample is bent in the fashion as shown in Figure 1 and there is no crack or break on the coating.

The powder coating composition and coating provided by this invention are suitable for heat-sensitive substrates, and in particular (highly) flexible substrates. Examples of flexible and heat sensitive substrates include leather, textile, paper and flexible plastic. Heat-sensitive substrates include wood, wood composites such as particle board and high, medium or low density fibre board. Examples of flexible substrates include metal wire and rubber. The powder coating composition and coating provided by this invention can also be applied for traditional heat resistant substrates, and heat resistant composites and components, although the advantages of the present invention are most clearly demonstrated on heat-sensitive and/or flexible substrates.

The oligomer or polymer chosen as the principal resin (which, as will be understood, will be formulated during manufacture from the appropriate monomers) for the coating composition may be any suitable oligomer or polymer, provided that it possesses a suitable melting point and a suitable degree of crystallinity when in the uncured state. A suitable melting point is one that will be above the required storage temperature but below the desirable baking temperature. A suitable degree of crystallinity is one that will provide a powder coating which is stable during storage, so as to prevent or minimize any blockage of the particulate powder formulation. Semi-crystalline or crystalline polymers are therefore preferred, and are most suitable. Suitable polymers include polyurethanes and polyesters. Polyurethanes are particularly preferred. It is preferred to use oligomers or polymers with a melting point ($T_m$) of below 120°C, more preferably below 100°C. For the cured polymer, a glass transition temperature ($T_g$) of below 50°C, for instance a $T_g$ of below room temperature (20-25°C) is preferred, particularly a $T_g$ of below 0°C. The oligomers or polymers used can be made according to methods known to those skilled in the art, for example by step-growth (condensation or addition) polymerization of suitable monomers.

The composition according to the invention can comprise one or more oligomers and/or polymers. In case that more than one oligomer and/or polymer is used, the one present in the highest amount will here and hereinafter be referred to as "principal resin" or "principal oligomer" or "principal polymer". With highest amount is referred to the amount in gram.

A principle of the invention is based upon the idea of providing an oligomer or polymer suitable for a powder coating composition and a composition comprising the oligomer or polymer wherein, before curing in the molten state, the oligomer or polymer in the composition possesses crystalline or semi-crystalline properties, but which composition, after melting, flow-out and curing, provides a film of high flexibility. We have found that this can be achieved by ensuring that, after curing, the polymeric network obtained after curing the composition according to the invention is essentially in an amorphous, or low-crystalline state, having a low $T_g$, preferably a $T_g$ of well below room temperature.

The conversion of the oligomer or polymer component to an amorphous or low-crystalline, low $T_g$ state can, for example, be achieved by further polymerization and/or crosslinking of the oligomer or polymer present in the initial uncured composition. Preferably, this further polymerization and/or crosslinking is initiated by radiation or thermally or by a combination of the two. Preferably curing is effected through UV-radiation or thermally or by a combination of the two. This preferably results in an essentially amorphous polymer network which confers high flexibility to the cured film, thus making the film particularly suitable for use with flexible substrates.

The object of the invention can, if desired, be achieved by employing one or more crystalline or semi-crystalline oligomers or polymers, for example a polyurethane or a polyester (for example, polycaprolactone), provided the oligomer or polymer possesses at least terminal functional groups which are capable of providing crosslinking and/or further polymerization of the oligomer or polymer. Preferably, such functional groups are UV curable (for example, acrylate groups) or thermally curable with a suitable chain extender or crosslinker of functionality ≥2. Within the scope of the invention it should be understood that where acrylates is mentioned also methacrylates can be used.

Alternatively, in a preferred embodiment, monomers for the base crystalline or semi-crystalline oligomer or polymer are copolymerised, preferably randomly, with one or more further suitable monomers. One or more of the monomers serves to provide reactive or functional groups which upon curing give rise to further polymerization and/or crosslinking such that the resulting polymer has reduced crystallinity and substantially amorphous character. Copolymerisation with the further suitable monomers provides a modified oligomer or polymer with some reduction in melting point and crystallinity (compared to the pure oligomer or polymer), but the uncured modified oligomer or polymer has the advantage of being sufficiently crystalline to be stable on storage (i.e. it is still crystalline or semi-crystalline), whilst enabling melting and flow-out at lower temperatures so as to be useable with highly flexible and/or heat-sensitive substrates.

Where copolymerisable monomers are employed, it is preferred to use one or more branched, difunctional monomers (i.e. possessing two reactive or functional groups), where at least one branch or side group is present. Where a copolymerisable monomer is used, the monomer must be capable of being incorporated into the backbone of the crystalline or semi-crystalline oligomer or polymer.

Preferably, in at least one monomer, one branch or side group contains an unsaturated group, or a functional or reactive group, which can undergo polymerization and/or crosslinking reactions upon curing, preferably upon curing thermally or with UV radiation, either with or without the need for additional crosslinking agents. Suitable monomers include branched diols. Particularly suitable are branched diol compounds containing one or more unsaturated groups, for example acrylate or allyl, in one of the branches, although any suitable reactive group can be used.

In a preferred embodiment, two monomers, designated monomers A and B are employed in addition to the monomers needed for the oligomer or polymer. Both monomers may be in accordance with the above description, although are preferably different. Monomer A is preferably a branched, difunctional compound with at least one branch containing an unsaturated or reactive group as described above, whereas monomer B is preferably a branched, difunctional compound without further modification. For example, monomer A may be a diol with at least one branch containing an acrylate or allyl group, and monomer B may be a diol with at least one branched alkyl group. These monomers are, for example, particularly suitable for copolymerising with the monomers required for polyurethanes.

Preferably, Monomer A contains one or more UV radiation curable functional groups such as acrylate or allyl groups, so that low temperature curing is applicable. Alternatively, thermally curable functional groups such as carboxylic acid-, epoxy-, isocyanates-, amine- and hydroxyl- groups, are included in monomer A. These can undergo polymerization and/or crosslinking reactions upon curing, although generally require additional crosslinking agents in the coating formulations, such as isocyanates or epoxy or acid anhydrides based crosslinking agents or a combination of them.

The total amount of copolymerisable monomer(s) can vary and can, for example, be up to 100% or more on a mole basis with respect to the oligomer or polymer. A range of 10-90% is suitable for most applications.

In a preferred embodiment, a crystalline or semi-crystalline polyurethane oligomer or polymer is prepared by copolymerisation of a monomer composition comprising Monomer I, II, A and B:

Monomer I: at least one diisocyanate with a flexible backbone such as for example an aliphatic diisocyanate, suitably hexamethylene diisocyanate (HDI);
Monomer II: at least one a diol with a flexible aliphatic backbone or a backbone containing ether linkages for example diethylene glycol (DEG);
Monomer A: at least one diol with UV-curable acrylate group of the general formula:

$$CH_2=CRCOO(CH_2)_m C(R^1)(CH_2OH)_2$$

where R is -H or -$CH_3$
$R^1$ is H or a linear or branched alkyl group -$C_nH_{2n+1}$ where n is an integral number between 1 and 4,
m is an integral number between 1 and 4

or alternatively for a thermal-curing resin, a diol of the general formula:

$$FG-C(R^2)(CH_2OH)_2$$

where FG represents a functional group being carboxylic acid- , epoxy-, isocyanate-, amine-, (meth)acrylate- or hydroxyl group suitable for thermal curing with a crosslinking agent, $R^2$ is a linear or branched alkyl group, $-C_nH_{2n+1}$ where n is an integer chosen between 1 and 4, preferably between 2-4

Examples of monomer A include 2,2-dihydroxymethylbutyl acrylate (DHBA) and 2,2-bis(hydroxymethyl) butyric acid (BHB). These compounds are particularly useful in conjunction with polyurethanes, but can be used with other polymers if desired.

Monomer B: a diol of the general formula:

$$HO(CH_2)_xCR^3(R^4)(CH^2)_yOH,$$

where x and y are integers and independently of each other chosen between 1 and 6 $R^3$ is H or a linear or branched alkyl group $-C_nH_{2n+1}$ wherein n is an integer chosen between 1 and 4

$R^4$ is a linear or branched alkyl group $-C_nH_{2n+1}$ where n is an integer chosen between 1 and 9

Monomer B can, for example, be 2-butyl-2-ethyl-1,3-propanediol (BEP).

The monomers I and II are such a pair that when a polyurethane is made from only monomers I and II, it will be crystalline or semi-crystalline with a $T_m$ preferably below 160°C, and a $T_g$ below 50°C preferably well below room temperature. Suitably a pair such as HDI and DEG are used so as to give a linear polyurethane with -OH end group having $T_m$ ranging from 68°C to 125°C when the molar mass of the polyurethane ranges from 380 to 4220 g/mol. HDI and DEG are preferred as the monomers for the resins of this invention.

It was found that monomer A serves to introduce pendant functional groups to the polyurethane backbone which functional groups upon curing give rise to further polymerization and/or crosslinking such that the resulting polymer matrix has reduced crystallinity and substantially amorphous character. The pendant groups also serve to reduce the $T_m$ and crystallinity of the uncured polyurethane compared to a polyurethane made only from monomer I and II so that the polyurethane has a lower $T_m$ more suitable for melt and flow out at low temperature. It was also found that monomer B serves primarily to introduce inert pendant groups that do not take part in the curing reactions but which further reduce the $T_m$ and crystallinity of either cured or uncured polyurethane but particularly to reduce the crystallinity of the cured polyurethane.

Monomer B is incorporated in the composition for making the polyurethane according to the invention because it is generally cheaper than Monomer A but moreover it can be more effective than Monomer A in reducing the $T_m$ and crystallinity of either uncured or cured polyurethane.

In a broad aspect the composition comprises a diisocyanate (monomer I) and a diol mixture (three different diols, i.e., monomers II, A and B). The diol monomer II is preferably a linear diol, whereas the diols monomers A and B are preferably both branched diols. In preparation of the UV-curable polyurethane resins, the molar ratio of diisocyanate:diol (total) is preferably from 1:2 to 1.1:1.0, so that polyurethanes of different molar masses and crystallinities may be obtained, known to those skilled in the art. More preferably, the ratio is from 2:3 to 1:1, and most preferably around 2:3.

In a preferred embodiment for UV-curable polyurethane resins, four monomers, designated Monomers I, II, A and B are employed. Monomer I is HDI, Monomer II is DEG, Monomer A is 2,2-dihydroxymethylbutyl acrylate (DHBA) and Monomer B is 2-butyl-2-ethyl-1,3-propanediol (BEP). The relative amounts of the four monomers can vary.

The percentage (by mole) of the branched diols in the total diol content, contributed by monomers A plus B (if present), can vary quite widely, although is preferably within the range from 10% to 90%. We have found a percentage of from 30% and above to give good results, particularly in the range between 40-42% more particularly about 40%.

The mole fraction of monomer A in the mixture of A and B (i.e., the mole fraction of monomer A in the branched diols) was found to be influential. Suitably, the mole fraction of monomer A within the range of 20% to 60%, preferably 30% to 50%, is generally suitable for achieving the desired level of low crystallinity in the cured film. A particularly preferred composition has a molar ratio of diisocyanate to total diol of about 2:3 and a percentage (by mole) of monomer A plus monomer B of about 40% in the total diols (i.e., {A+B}/{II+A+B} = 40% by mole). However, this will vary to some extent depending upon exactly which monomer combination is chosen, the molar ratio of diisocyanates to diols, and the percentage of the branched monomer A and B in the total diols. Routine experimentation will reveal the ideal molar proportions for any given system.

Where thermal curing is employed, 2,2-bis(hydroxymethyl) butyric acid (BHB) may, for example, be chosen as monomer A. The sterically hindered carboxylic acid group in this monomer is less reactive than the primary hydroxyl group so it allows a polyurethane to be prepared with pendant carboxylic acid groups capable of further polymerisation and/or crosslinking in the presence of suitable crosslinking agents upon curing, just like the UV-curable acrylate groups described previously. Again, routine experimentation will reveal the ideal molar proportions for any given system.

In another embodiment, for a polyester based coating composition a crystalline or semi-crystalline polyester oligomer or polymer may be prepared by copolymerisation of an aliphatic, cyclo-aliphatic and/or aromatic carboxylic acid and at least one diol. Preferably the crystalline or semi-crystalline polyester oligomer or polymer is chosen so that it when subjected to heat melts and flows-out at a low temperature between 60°C and 180°C, more preferably between 60° and 140 °C, and when subjected to curing in the molten state by radiation and/or thermal energy, will give a highly flexible coating having either complete amorphous low glass transition temperature ($T_g$) polymeric matrix or low degree of crystallinity, low $T_g$ polymeric matrix.

In another preferred embodiment, for a polyester based coating composition, a crystalline or semi-crystalline polyester oligomer or polymer may be prepared by copolymerisation of the following monomer composition comprising Monomer I, II, A and B:

Monomer I: at least one dicarboxylic acid of formula $HOOC(CH_2)_mCOOH$ where m is an integer chosen between 0 to 16, or isophthalic acid or terephthalic acid or the functional derivatives such as for example acid halides, acid anhydrides and methyl or ethyl esters of the aforesaid acids.

Monomer II: at least one diol of formula $HO(CH_2)_nOH$ where n is 2 to 16, preferably 3 to 16 when Monomer I is isophthalic acid or a functional derivative thereof such as the ester form, or 5 to 16 when Monomer I is terephthalic acid or its ester form, or diethylene glycol or a polyether diol of short chain length, or 1,4-dihydroxymethylcyclohexane

Monomer A: at least one diol with UV-curable acrylate group of the general formula:

$$CH_2=CRCOO(CH_2)_mC(R^1)(CH_2OH)_2$$

where R is H or -$CH_3$
$R^1$ is H or any linear or branched alkyl group -$C_nH_{2n+1}$ where n is an integral number between 1 and 4,
m is an integral number between 1 and 4.

or alternatively for thermal curing resin a diol of the general formula:

$$FG-C(R^2)(CH_2OH)_2$$

where FG represents a functional group being carboxylic acid-, epoxy-, isocyanate-, amine-, (meth)acrylate-, or hydroxyl group suitable for thermal curing with a crosslinking agent,
$R^2$ is an linear or branched alkyl group, -$C_nH_{2n+1}$ (where n =1-4, preferably 2-4)

Monomer B: a diol of the general formula:

$$HO(CH_2)_xCR^3(R^4)(CH_2)_yOH,$$

where x and y are integers, independently from each other chosen between 1 to 6
$R^3$ is H or a linear or branched alkyl group -$C_nH_{2n+1}$ (where n =1-4)
$R^4$ is a linear or branched alkyl group -$C_nH_{2n+1}$ (where n =1-9)

Again routine experimentation will reveal the ideal molar proportions for any given system in terms of balancing the $T_m$ and crystallinity of the polyester before and after curing, but the ranges and proportions illustrated above for a crystalline or semi-crystalline polyurethane oligomer or polymer are generally applicable.

A powder coating composition according to the invention can be formulated using the oligomer and/or polymer described and is preferably in the form of a dry, fine, free-flowing particulate powder which is stable at room temperature, preferably stable up to close to the melting temperature of the composition. Compositions may be formulated according to procedures well known in the art (see for example Misev, T.A., "Powder Coatings", John Wiley and Sons Ltd, Chichester (1991). Thus, generally speaking, the monomeric components are blended together and copolymerised under suitable conditions, and then further blended with minor components as necessary. These may include crosslinking agents, photoinitiators, colorants, flow agents, as will be clear to those skilled in the art. After application, the composition is cured using radiation and/or thermally, as will be understood by the man skilled in the art. The various ingredients are preferably well mixed and then formulated as a dry, particulate powder.

An example of a powder coating formulation is:

| Ingredient | Description | Parts by weight |
|---|---|---|
| Binder | Polyurethane acrylate resin (as in Example 2) | 75 |
| | Polyurethane acrylate resin (as in Example 1) | 18 |
| Photoinitiator | Irgacure® 184 (Ciba) | 2 |
| Flow agent | WorléeAdd® 904 (Worlée-Chemie GmbH) | 3 |
| Fillers | Acrylate modified silica | 2 |
| Total | | 100 |

The he powder coating composition of the invention preferably has a melting temperature of less than 120°C, preferably less than 100°C. Suitably, the temperature is about 80°C or less. The oligomer and/or polymer in the powder coating composition can be chosen to achieve this. Preferably, melting and flow-out of the coating composition occurs at a temperature of from 60°C to 140°C. The comparatively low melting temperature has the advantage of enabling the composition to be used on heat-sensitive substrates, without damaging the substrate. Also, the crystalline or semi-crystalline nature of the uncured oligomer or polymer enables good flow out above the melting temperature.

The cured films provided by the coating compositions of the present invention are flexible, such that they advantageously can be applied to flexible substrates such as leather without cracking or splitting when the substrate is flexed. Preferably the degree of crystallinity in the coating is below 20%, preferably 10% or below, more preferably 5% or below. In some cases, and these are particularly preferred, the crystallinity will be zero or close to zero i.e. the polymeric matrix of the coating will be amorphous or substantially amorphous. As will be clear from the Examples, the degree of crystallinity in the cured film can be controlled by varying the proportions of the various components in the coating composition, in particular the monomers A and B. Routine experimentation can be used to give the desired level of crystallinity in any particular system.

Crystallinity can be measured conventionally by differential scanning calorimetry (DSC) by comparing the enthalpy change of melting of the oligomer or polymer with the literature values for a single crystal of oligomer or polymer made from monomer I and II only.

The glass transition temperature (Tg) of the final cured film or coating is an important factor. Generally speaking, the cured film will have a low Tg, for example below 50°C, or about 30°C or below, preferably one of room temperature (20-25°C) or below, preferably substantially below room temperature. A Tg of below 15°C, preferably below 10°C, more preferably below 0°C is desirable. Generally, the lower the Tg, the lower the temperature down to which good flexibility of the cured film or coating is maintained.

The following examples illustrate certain preferred embodiments of the invention.

Example 1

This example is based on polyurethane as the main polymer. Monomer A, 2,2-dihydroxymethylbutyl acrylate (DHBA), of formula $CH_2=CHCOOCH_2C(CH_2OH)_2CH_2CH_3$, was synthesized according to the method given by Couvret et al [D. Couvret, J. Brosse, S. Chevalier and J. Senet, Eur. Polym. J., 27(2), 193 (1991)] and F. R. Galiano et al [Fr. 1366079 dated 10 July 1964 and USP 3210327, dated 5 October 1965] as follows.

Firstly, 5-ethyl-5-hydroxymethyl-2,2-dimethyl-1,3-dioxolane (EHDD) was prepared by reacting trimethylolpropane (TMP) (268g, 2.0 mol) with excess acetone (1160g, 20 mol) in a solvent such as toluene (1 litre) at 62-109°C for 7.0 hours. 3.0 g of p-toluenesulphonic acid was added as catalyst. The excess amount of acetone was used to improve the yield of EHDD based on TMP. EHDD was obtained by distillation of the crude product (115°C at 5 mm Hg).

EHDD (121.5g) was then used to react with acryloyl chloride (62.8g) in chloroform (190ml), cooled with an ice/water bath, for 13 hours. Triethylamine (72.6g) was added to the reaction mixture to neutralize the HCl produced by the reaction. After filtration, the residues were dissolved in distilled water, and extracted with an organic solvent, such as chloroform. The aqueous layer was discarded and the solvent layer was washed with an equal volume of a 5% hydrochloric acid solution and then with distilled water. The solvent layer was collected and dried with $MgSO_4$. After filtration, the solvent was then removed. The crude product was distilled under reduced pressure (59°C at 0.8 mm Hg), and 5-acryloyloxymethyl-5-ethyl-2,2-dimethyl-1,3-dioxolane (AEDD) was obtained.

The hydrolysis of AEDD was carried out at 45 °C by stirring AEDD with 0.5N aqueous HCl for 3 hr. The solution was neutralized with $K_2CO_3$. The resulting DHBA was extracted by chloroform. After filtration and removing chloroform, the product DHBA (i.e., Monomer A) was dried with $MgSO_4$ and stored over molecular sieves.

Semi-crystalline polyurethane acrylate was prepared by reacting hexamethylene diisocyanate, (HDI), with a diol mixture comprising diethylene glycol, Monomer A (the above synthesized), and Monomer B (2-Butyl-2-Ethyl-1,3-propanediol (BEP)). In this example, the molar ratio of diisocyanate to diols is 2.0: 3.0; the ratio of Monomer A to B varied but the total content of Monomers A and B in the diols was kept at 40% by mole. The polymerization was carried out in dried flask under nitrogen at $55 \pm 1°C$ for 10 hours in chloroform as a solvent.

The obtained polyurethane acrylate was then formulated with a photo-initiator namely Irgacure® 184 (Ciba) (this is an alpha-hydroxy ketone), and samples were heated by infrared radiation below 100°C, flowing and levelling, and cured with UV radiation (UV intensity was about 1J/cm $^2$) for about 20 seconds.

The particular composition used for coating the leather sample shown in Figure 1 is given below. The polyurethane was prepared with a molar ratio HDI/DEG/DHBA/BEP = 1.00: 0.895: 0.577: 0.00960. The polymerisation was carried out in a dried flask under nitrogen flow at $55 \pm 1°C$ for 5 hours. The prepared semi-crystalline polyurethane was formulated with 1.5% (w/w) Irgacure® 184. The coating formulation was applied to leather and heated and cured by UV radiation at an intensity of about 1 J/cm$^2$ for 20 seconds.

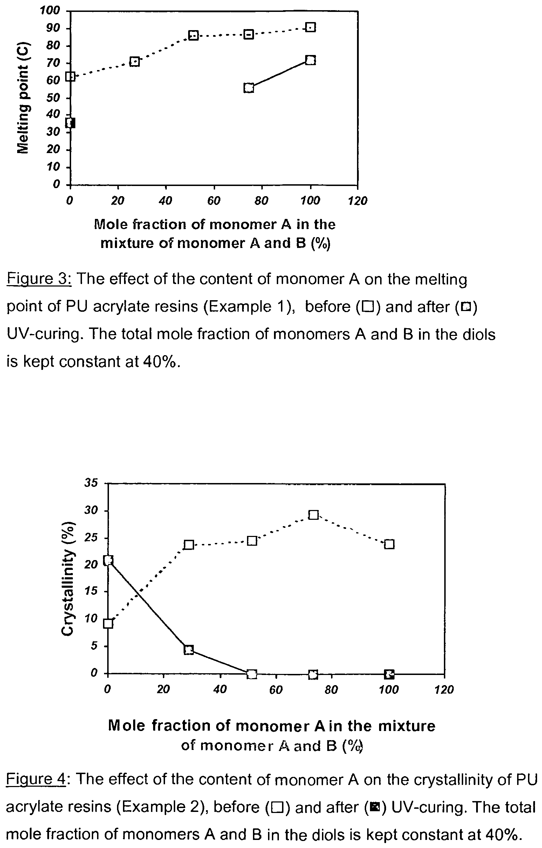

The effect of Monomer A-content on the degree of crystallization and melting point, before and after UV-curing, is shown in Figure 2 and Figure 3. it can be seen that the crystallinity and melting point of the prepared polyurethanes all increase with the content of Monomer A before UV curing. However, after UV curing, the crosslinked polymer became non-crystalline for a particular range of Monomer A content. The $T_g$ of the crosslinked polymer was about 0°C to -25°C, depending on the mole fraction of Monomer A.

Example 2

In this example the monomer selections for the polyurethane acrylate are the same as those in Example 1.

However, in this Example, the polyurethanes were prepared with a molar ratio of diisocyanate to diols being 1.1:1.0. The polymerization was carried out in chloroform as a solvent by refluxing at 60-61°C for 10 hours. The solvent was removed at 80°C under reduced pressure after the polymerization was completed. The content of monomer A was varied, while the total mole fraction of monomers A and B in the diols was kept constant at 40%.

The semi-crystalline polymer was then formulated, heated and cured as described for Example 1.

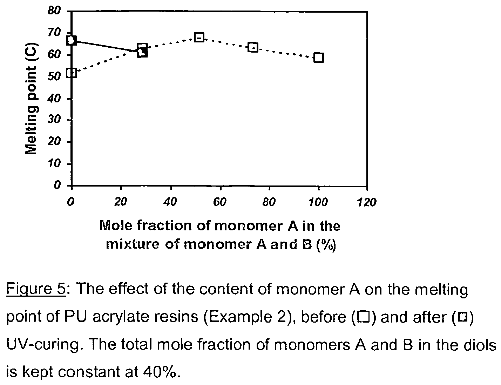

The effect of the content of monomer A on the crystallinity and melting point is shown in Figure 4 and Figure 5 respectively. It is clear from Figures 4 and 5 that the crystallinities and melting points increase and then level off as the content of monomer A in the mixture of monomer A and B increases before UV curing. After UV curing, the crystallinities and melting points decrease as the content of monomer A increases; and when the content of A is above about 50% (or the mole fraction of A in the total amount of diols is higher than about 20%), the polymer is non-crystalline. The $T_g$ of the crosslinked polymer is about 18 to -20°C, depending on the mole fraction of Monomer A.

In the figures which follow, all crystallinity and $T_m$ measurements are determined by DSC. $T_m$ is taken as the onset temperature of the melting peak in the DSC curve. If there are multiple melting peaks, then the $T_m$ value is taken from the most significant peak; if peaks are of comparable size then the peak of the highest melting temperature is used for $T_m$. Crystallinity was measured by taking into account all of the melting peaks in a multi-peak case.

**Claims**

1. A crystalline or semi-crystalline oligomer or polymer which oligomer or polymer

   i) is a polyurethane or a polyester,
   ii) has a melting temperature below 100°C,
   iii) can be cured by radiation curing and/or thermal curing,
   iv) is obtained by copolymerisation of a monomer composition comprising Monomer I, II, A and B, wherein the mol fraction of A in the mixture of A and B is in the range 20 to 60%, and wherein,
   if the oligomer or polymer is a polyurethane, then:

   Monomer I: at least one diisocyanate with a flexible backbone;
   Monomer II: at least one diol with a flexible aliphatic backbone or a backbone containing ether linkages;
   Monomer A: at least one diol with a UV-curable acrylate group of formula:

   $$CH_2=CRCOO(CH_2)_mC(R^1)(CH_2OH)_2$$

   wherein

R is -H or -CH$_3$,

R$^1$ is -H or a linear or branched alkyl group -C$_n$H$_{2n+1}$ where n is an integral number between 1 and 4,

m is an integral number between 1 and 4,

or alternatively for a thermal curing polyurethane, Monomer A is a diol of the general formula:

$$FG-C(R^2)(CH_2OH)_2$$

wherein

FG represents a functional group being carboxylic acid- , epoxy-, isocyanate-, amine-, (meth)acrylate- or hydroxyl group suitable for thermal curing with a crosslinking agent,

R$^2$ is a linear or branched alkyl group, -C$_n$H$_{2n+1}$ wherein n is an integer chosen between 1 and 4;

Monomer B: a diol of the general formula:

$$HO(CH_2)_xCR^3(R^4)(CH_2)_yOH$$

wherein

x and y are integers and independently of each other chosen between 1 and 6,

R$^3$ is H or a linear or branched alkyl group -C$_n$H$_{2n+1}$ wherein n is an integer chosen between 1 and 4

R$^4$ is a linear or branched alkyl group -C$_n$H$_{2n+1}$ where n is an integer chosen between 1 and 9;

or if the oligomer or polymer is a polyester then:

Monomer I: at least one dicarboxylic acid of formula HOOC(CH$_2$)$_m$COOH where m is an integer chosen between 0 and 16, or isophthalic acid or terephthalic acid or the functional derivatives thereof;

Monomer II: at least one diol of formula HO(CH$_2$)$_n$OH where n is an integer chosen between 2 and 16, preferably 3 to 16 when Monomer I is isophthalic acid or a functional derivative thereof such as the ester form, or 5 to 16 when Monomer I is terephthalic acid or its ester form, or diethylene glycol or a polyether diol of short chain length, or 1,4-dihydroxymethylcyclohexane;

Monomer A: at least one diol with UV-curable acrylate group of the general formula:

$$CH_2=CRCOO(CH_2)_mC(R^1)(CH_2OH)_2$$

wherein

R is H or -CH$_3$

R$^1$ is H or a linear or branched alkyl group -C$_n$H$_{2n+1}$ where n is an integral number between 1 and 4,

m is an integral number between 1 and 4,

or alternatively for a thermal curing polyester, Monomer A is a diol of the general formula:

$$FG-C(R^2)(CH_2OH)_2$$

wherein

FG represents a functional group being carboxylic acid-, epoxy-, isocyanate-, amine-, (meth)acrylate- or hydroxyl group suitable for thermal curing with a crosslinking agent,

R$^2$ is a linear or branched alkyl group -C$_n$H$_{2n+1}$ wherein n is an integer chosen between 1 and 4;

Monomer B: a diol of the general formula:

$$HO(CH_2)_xCR^3(R^4)(CH_2)_yOH,$$

wherein

x and y are integers independently chosen between 1 and 6

$R^3$ is H or an alkyl group $-C_nH_{2n+1}$ wherein n is an integer chosen between 1-4

$R^4$ is an alkyl group $-C_nH_{2n+1}$ wherein n is an integer chosen between 1-9;

and

v) when said oligomer or polymer is subjected to heat melts and flows-out at a temperature between 60°C and 180°C, and when said oligomer or polymer is subsequently subjected to curing in the molten state by radiation and/or thermal energy will give a coating having a polymeric matrix which polymeric matrix

a. has a flexibility of at least 10%, wherein the flexibility is determined as the tensile elongation at break according to the ISO norm 527 using a tensile test speed of 100mm/min and a maximum tensile distance of 50 mm,

b. has a $T_g$ below 50°C, wherein the $T_g$ is measured via Differential Scanning Calorimetry at a heating rate of 10°C/min, and

c. is either completely amorphous or the polymeric matrix has a degree of crystallinity of 20% or less wherein the degree of crystallinity (C) is determined according to the equation

$$C = (\Delta H/\Delta H_{100\%}) \cdot 100\%$$

where

$\Delta H$ is the measured heat of fusion [J/g] from Differential Scanning Calorimetry at a heating rate of 10°C/min, and

$\Delta H_{100\%}$ is the heat of fusion of the corresponding 100% crystalline polymer [J/g] given by literature.

2. The crystalline or semi-crystalline oligomer or polymer according to claim 1, wherein the polymeric matrix has a $T_g$ of 30°C or less.

3. The crystalline or semi-crystalline oligomer or polymer according to any one of claims 1-2, wherein the percentage by mole of the branched diols in the total diol content, contributed by Monomers A and B is within the range from 10 to 90%.

4. The crystalline or semi-crystalline oligomer or polymer according to any one of claims 1-2, wherein the percentage by mole of the branched diols in the total diol content, contributed by Monomers A and B is within the range from 30 to 90%.

5. A composition comprising at least one crystalline or semi-crystalline oligomer or polymer according to anyone of claims 1-4 and at least one auxiliary component usual for coating compositions chosen from the list comprising crosslinking agent, photoinitiator, colorant or flow agent.

6. The composition according to claim 5 wherein the composition is a powder coating composition.

7. A coating prepared from the composition according to claim 5 or claim 6.

8. A process to provide a substrate with a coating, wherein the process comprises the following steps:

a. providing a composition according to claim 5 or claim 6;

b. applying the coating composition onto the surface of the substrate

c. subject the coated substrate to heat causing the coating composition to melt and flow-out at a temperature between 60°C and 180°C followed by

d. curing in the molten state by radiation and/or thermal energy.

9. A substrate coated with the composition according to claim 5 or claim 6.

10. A use of the crystalline or semi-crystalline oligomer or polymer according to anyone of claims 1-4, in a powder coating composition.

11. A use of the composition according to claim 5 or claim 6 to coat heat sensitive or heat resistant, or rigid or flexible substrates or flexible and heat sensitive substrates.

12. The use of a composition according to claim 11 to coat leather, artificial leather, textile, plastic, paper, cardboard, wood, wood composites, particle board, high, medium or low density fibre board, metal wire, rubber or rubber-like materials.

**Patentansprüche**

1. Kristallines oder semikristallines Oligomer oder Polymer, wobei das Oligomer oder Polymer

i) ein Polyurethan oder ein Polyester ist,
ii) eine Schmelztemperatur unter 100 °C hat,
iii) durch Strahlungshärtung und/oder thermische Härtung gehärtet werden kann,
iv) durch Copolymerisation einer Monomerzusammensetzung erhalten wird, die Monomer I, II, A und B umfasst, wobei der Molenbruch von A in der Mischung von A und B im Bereich von 20 bis 60 % liegt, und wobei

wenn das Oligomer oder Polymer ein Polyurethan ist, dann:

Monomer I: mindestens ein Diisocyanat mit einem flexiblen Grundgerüst ist;
Monomer II: mindestens ein Diol mit einem flexiblen aliphatischen Grundgerüst oder einem Grundgerüst ist, welches Etherverknüpfungen enthält;
Monomer A: mindestens ein Diol mit einer UV-härtbaren Acrylatgruppe mit der folgenden Formel ist:

$$CH_2=CRCOO(CH_2)_mC(R^1)(CH_2OH)_2$$

wobei

R -H oder -CH$_3$ ist,
R$^1$ -H oder eine lineare oder verzweigte Alkylgruppe -C$_n$H$_{2n+1}$ ist, wobei n eine ganze Zahl zwischen 1 und 4 ist, m eine ganze Zahl zwischen 1 und 4 ist,

oder alternativ Monomer A für ein thermisch härtendes Polyurethan ein Diol mit der folgenden allgemeinen Formel ist:

$$FG-C(R^2)(CH_2OH)_2$$

wobei

FG für eine funktionale Gruppe steht, die Carbonsäure-, Epoxy-, Isocyanat-, Amin-, (Meth)acrylat- oder Hydroxylgruppe ist, die zum thermischen Härten mit einem Vernetzungsmittel geeignet ist,
R$^2$ eine lineare oder verzweigte Alkylgruppe -C$_n$H$_{2n+1}$ ist, wobei n eine ganze Zahl ausgewählt zwischen 1 und 4 ist;
Monomer B: ein Diol mit der folgenden allgemeinen Formel ist:

$$HO(CH_2)_xCR^3(R^4)(CH_2)_yOH$$

wobei

x und y ganze Zahlen sind und unabhängig voneinander zwischen 1 und 6 ausgewählt sind,
R$^3$ H oder eine lineare oder verzweigte Alkylgruppe -C$_n$H$_{2n+1}$ ist, wobei n eine ganze Zahl ausgewählt zwischen 1 und 4 ist;
R$^4$ eine lineare oder verzweigte Alkylgruppe -C$_n$H$_{2n+1}$ ist, wobei n eine ganze Zahl ausgewählt zwischen 1 und 9 ist;

oder wenn das Oligomer oder Polymer ein Polyester ist, dann:

Monomer I: mindestens eine Dicarbonsäure mit der Formel HOOC(CH$_2$)m$_C$OOH, wobei m eine ganze Zahl ausgewählt zwischen 0 und 16 ist, oder Isophthalsäure oder Terephthalsäure oder deren funktionalen Derivate ist;

Monomer II: mindestens ein Diol mit der Formel $HO(CH_2)_nOH$, wobei n eine ganze Zahl ausgewählt zwischen 2 und 16, vorzugsweise 3 bis 16 ist, wenn Monomer I Isophthalsäure oder ein funktionales Derivat davon ist, wie die Esterform, oder 5 bis 16 ist, wenn Monomer I Terephthalsäure oder deren Esterform ist, oder Diethylenglycol oder ein Polyetherdiol mit kurzer Kettenlänge oder 1,4-Dihydroxymethylcyclohexan ist;

Monomer A: mindestens ein Diol mit einer UV-härtbaren Acrylatgruppe mit der folgenden allgemeinen Formel ist:

$$CH_2=CRCOO(CH_2)_mC(R^1)(CH_2OH)_2$$

wobei

R H oder $-CH_3$ ist,
$R^1$ H oder eine lineare oder verzweigte Alkylgruppe $-C_nH_{2n+1}$ ist, wobei n eine ganze Zahl zwischen 1 und 4 ist, m eine ganze Zahl zwischen 1 und 4 ist,

oder alternativ Monomer A für einen thermisch härtenden Polyester ein Diol mit der folgenden allgemeinen Formel ist:

$$FG-C(R^2)(CH_2OH)_2$$

wobei

FG für eine funktionale Gruppe steht, die Carbonsäure, Epoxy-, Isocyanat-, Amin-, (Meth)acrylat- oder Hydroxylgruppe ist, die zum thermischen Härten mit einem Vernetzungsmittel geeignet ist,
$R^2$ eine lineare oder verzweigte Alkylgruppe $-C_nH_{2n+1}$ ist, wobei n eine ganze Zahl ausgewählt zwischen 1 und 4 ist;

Monomer B: ein Diol mit der folgenden allgemeinen Formel ist:

$$HO(CH_2)_xCR^3(R^4)(CH_2)_yOH,$$

wobei

x und y ganze Zahlen unabhängig zwischen 1 und 6 ausgewählt sind,
$R^3$ H oder eine Alkylgruppe $-C_nH_{2n+1}$ ist, wobei n eine ganze Zahl ausgewählt zwischen 1 und 4 ist;
$R^4$ eine Alkylgruppe $-C_nH_{2n+1}$ ist, wobei n eine ganze Zahl ausgewählt zwischen 1 und 9 ist; und

v) wenn das Oligomer oder Polymer Wärme ausgesetzt wird, es bei einer Temperatur zwischen 60 °C und 180 °C schmilzt und ausfließt, und wenn das Oligomer oder Polymer nachfolgend Härten im geschmolzenen Zustand durch Strahlung und/oder thermische Energie unterzogen wird, sich eine Beschichtung mit einer polymeren Matrix ergibt, wobei die polymere Matrix

a. eine Flexibilität von mindestens 10 % aufweist, wobei die Flexibilität als Zugdehnung bei Bruch gemäß der ISO-Norm 527 unter Verwendung einer Zugprüfgeschwindigkeit von 100 mm/min und einem maximalen Zugabstand von 50 mm bestimmt wird,
b. eine $T_g$ unter 50 °C aufweist, wobei die $T_g$ mittels Differentialscanningkalorimetrie mit einer Heizrate von 10°C/min gemessen wird, und
c. entweder vollständig amorph ist, oder die polymere Matrix einen Kristallinitätsgrad von 20 % oder weniger aufweist, wobei der Kristallinitätsgrad (C) gemäß der folgenden Gleichung bestimmt wird:

$$C = (\Delta H/\Delta H_{100\%}) \cdot 100\ \%$$

wobei

PH die gemessene Schmelzwärme in [J/g] aus der Differentialscanningkalorimetrie mit einer Heizrate von 10°C/min ist, und

$\Delta H_{100\%}$ die in der Literatur angegebene Schmelzwärme des entsprechenden 100 % kristallinen Polymers in [J/g] ist.

**2.** Kristallines oder semikristallines Oligomer oder Polymer nach Anspruch 1, wobei die polymere Matrix eine $T_g$ von 30 °C oder weniger aufweist.

**3.** Kristallines oder semikristallines Oligomer oder Polymer nach einem der Ansprüche 1 bis 2, wobei der molare Prozentsatz der verzweigten Diole in dem gesamten Diolgehalt, den Monomere A und B beitragen, innerhalb des Bereichs von 10 bis 90 % liegt.

**4.** Kristallines oder semikristallines Oligomer oder Polymer nach einem der Ansprüche 1 bis 2, wobei der molare Prozentsatz der verzweigten Diole in dem gesamten Diolgehalt, den Monomere A und B beitragen, innerhalb des Bereichs von 30 bis 90 % liegt.

**5.** Zusammensetzung, die mindestens ein kristallines oder semikristallines Oligomer oder Polymer nach einem der Ansprüche 1 bis 4 und mindestens eine Hilfskomponente, die für Beschichtungszusammensetzungen gebräuchlich ist, ausgewählt aus der Liste umfassend Vernetzungsmittel, Photoinitiator, Färbungsmittel oder Fließmittel umfasst.

**6.** Zusammensetzung nach Anspruch 5, wobei die Zusammensetzung eine Pulverbeschichtungszusammensetzung ist.

**7.** Beschichtung, die aus der Zusammensetzung gemäß Anspruch 5 oder Anspruch 6 hergestellt ist.

**8.** Verfahren zum Bereitstellen einer Beschichtung auf einem Substrat, wobei das Verfahren die folgenden Schritte umfasst:

a. Bereitstellen einer Zusammensetzung gemäß Anspruch 5 oder Anspruch 6;
b. Aufbringen der Beschichtungszusammensetzung auf die Oberfläche des Substrats;
c. Einwirkenlassen von Wärme auf das beschichtete Substrat, um das Schmelzen und Ausfließen der Beschichtungszusammensetzung bei einer Temperatur zwischen 60 °C und 180 °C zu bewirken, gefolgt von
d. Härten im geschmolzenen Zustand durch Strahlung und/oder thermische Energie.

**9.** Substrat, das mit der Zusammensetzung gemäß Anspruch 5 oder Anspruch 6 beschichtet ist.

**10.** Verwendung des kristallinen oder semikristallinen Oligomers oder Polymers gemäß einem der Ansprüche 1 bis 4 in einer Pulverbeschichtungszusammensetzung.

**11.** Verwendung der Zusammensetzung gemäß Anspruch 5 oder Anspruch 6 zum Beschichten von wärmeempfindlichen oder wärmebeständigen oder starren oder flexiblen Substraten oder flexiblen und wärmeempfindlichen Substraten.

**12.** Verwendung einer Zusammensetzung nach Anspruch 11 zum Beschichten von Leder, Kunstleder, Textil, Kunststoff, Papier, Pappe, Holz, Holzverbundwerkstoffen, Spanplatte, Faserplatte mit hoher, mittlerer oder niedriger Dichte, Metalldraht, Kautschuk oder kautschukartigen Materialien.

**Revendications**

**1.** Oligomère ou polymère cristallin ou semi-cristallin, lequel oligomère ou polymère

i) est un polyuréthane ou un polyester,
ii) a une température de fusion inférieure à 100 °C,
iii) peut être durci par durcissement par rayonnement et/ou durcissement thermique,
iv) est obtenu par copolymérisation d'une composition de monomères comprenant les monomères I, II, A et B, la fraction molaire de A dans le mélange de A et B se situant dans la gamme de 20 à 60 %, et dans lequel si l'oligomère ou polymère est un polyuréthane, alors :

monomère I : au moins un diisocyanate avec un squelette souple ;
monomère II : au moins un diol avec un squelette aliphatique souple ou un squelette contenant des liaisons éther ;
monomère A : au moins un diol avec un groupe acrylate durcissable aux UV de formule :

$$CH_2=CRCOO(CH_2)_mC(R^1)(CH_2OH)_2$$

dans laquelle

R est -H ou -CH$_3$,
R$^1$ est -H ou un groupe alkyle linéaire ou
ramifié -C$_n$H$_{2n+1}$ où n est un nombre entier entre 1 et 4, m est un nombre entier entre 1 et 4,
ou en variante pour un polyuréthane à durcissement thermique, le monomère A est un diol de la formule générale :

$$FG-C(R^2)(CH_2OH)_2$$

dans laquelle
FG représente un groupe fonctionnel qui est un groupe acide carboxylique, époxy, isocyanate, amine, (méth)acrylate ou hydroxyle approprié pour un durcissement thermique avec un agent de réticulation,
R$^2$ est un groupe alkyle linéaire ou ramifié -C$_n$H$_{2n+1}$ dans lequel n est un entier choisi entre 1 et 4 ;

monomère B : un diol de la formule générale :

$$HO(CH_2)_xCR^3(R^4)(CH_2)_yOH$$

dans laquelle

x et y sont des entiers et choisis indépendamment l'un de l'autre entre 1 et 6,
R$^3$ est H ou un groupe alkyle linéaire ou ramifié -C$_n$H$_{2n+1}$ dans lequel n est un entier choisi entre 1 et 4,
R$^4$ est un groupe alkyle linéaire ou ramifié -C$_n$H$_{2n+1}$ où n est un entier choisi entre 1 et 9 ;

ou si l'oligomère ou polymère est un polyester, alors :

monomère I : au moins un acide dicarboxylique de formule HOOC(CH$_2$)$_m$COOH où m est un entier choisi entre 0 et 16, ou bien l'acide isophtalique ou l'acide téréphtalique ou les dérivés fonctionnels de ceux-ci ;
monomère II : au moins un diol de formule HO(CH$_2$)$_n$OH où n est un entier choisi entre 2 et 16, de préférence 3 et 16 quand le monomère I et l'acide isophtalique ou un dérivé fonctionnel de celui-ci tel que la forme estérifiée, ou 5 et 16 quand le monomère I est l'acide téréphtalique ou sa forme estérifiée, ou le diéthylène glycol ou un polyéther-diol de courte longueur de chaîne, ou le 1,4-dihydroxyméthyl-cyclohexane ;
monomère A : au moins un diol avec un groupe acrylate durcissable aux UV de la formule générale :

$$CH_2=CRCOO(CH_2)_mC(R^1)(CH_2OH)_2$$

dans laquelle

R est H ou -CH$_3$,
R$^1$ est H ou un groupe alkyle linéaire ou
ramifié -C$_n$H$_{2n+1}$ où n est un nombre entier entre 1 et 4, m est un nombre entier entre 1 et 4,

ou en variante pour un polyester à durcissement thermique, le monomère A est un diol de la formule générale :

$$FG-C(R^2)(CH_2OH)_2$$

dans laquelle

FG représente un groupe fonctionnel qui est un groupe acide carboxylique, époxy, isocyanate, amine, (méth)acrylate ou hydroxyle approprié pour un durcissement thermique avec un agent de réticulation, $R^2$ est un groupe alkyle linéaire ou ramifié -$C_nH_{2n+1}$ dans lequel n est un entier choisi entre 1 et 4 ;

monomère B : un diol de la formule générale :

$$HO(CH_2)_xCR^3(R^4)(CH_2)_yOH$$

dans laquelle

x et y sont des entiers indépendamment choisis entre 1 et 6,
$R^3$ est H ou un groupe alkyle -$C_nH_{2n+1}$ dans lequel n est un entier choisi entre 1 et 4,
$R^4$ est un groupe alkyle -$C_nH_{2n+1}$ dans lequel n est un entier choisi entre 1 et 9 ;

et
v) quand ledit oligomère ou polymère est soumis à de la chaleur, il fond et s'écoule à une température comprise entre 60 °C et 180 °C, et quand ledit oligomère ou polymère est ensuite soumis à un durcissement à l'état fondu avec de l'énergie de rayonnement et/ou thermique, il donnera un revêtement ayant une matrice polymère, laquelle matrice polymère

a. a une souplesse d'au moins 10 %, la souplesse étant déterminée comme l'allongement à la rupture en traction selon la norme ISO 527 en utilisant une vitesse d'essai de traction de 100 mm/min et une distance de traction maximale de 50 mm,
b. a une $T_g$ inférieure à 50 °C, la $T_g$ étant mesurée par calorimétrie différentielle à balayage à une vitesse de chauffage de 10 °C/min, et
c. est totalement amorphe, ou bien la matrice polymère a un degré de cristallinité de 20 % ou moins, le degré de cristallinité (C) étant déterminé selon l'équation

$$C = (\Delta H/\Delta H_{100\%}).100\%$$

où
$\Delta H$ est la chaleur de fusion [J/g] mesurée par calorimétrie différentielle à balayage à une vitesse de chauffage de 10 °C/min, et
$\Delta H_{100\%}$ est la chaleur de fusion [J/g] du polymère 100 % cristallin correspondant donnée par la littérature.

2. Oligomère ou polymère cristallin ou semi-cristallin selon la revendication 1, la matrice polymère ayant une $T_g$ de 30 °C ou moins.

3. Oligomère ou polymère cristallin ou semi-cristallin selon l'une quelconque des revendications 1 et 2, le pourcentage molaire des diols ramifiés dans la teneur totale en diols auquel contribuent les monomères A et B se situant dans la gamme de 10 à 90 %.

4. Oligomère ou polymère cristallin ou semi-cristallin selon l'une quelconque des revendications 1 et 2, le pourcentage molaire des diols ramifiés dans la teneur totale en diols auquel contribuent les monomères A et B se situant dans la gamme de 30 à 90 %.

5. Composition comprenant au moins un oligomère ou polymère cristallin ou semi-cristallin selon l'une quelconque des revendications 1 à 4 et au moins un constituant auxiliaire habituel pour les compositions de revêtement choisi dans la liste comprenant un agent de réticulation, un photoinitiateur, un colorant ou un agent d'écoulement.

6. Composition selon la revendication 5, la composition étant une composition de revêtement en poudre.

7. Revêtement préparé à partir de la composition selon la revendication 5 ou la revendication 6.

8. Procédé d'obtention d'un substrat avec un revêtement, le procédé comprenant les étapes suivantes :

a. obtenir une composition selon la revendication 5 ou la revendication 6 ;

18

b. appliquer la composition de revêtement sur la surface du substrat ;
c. soumettre le substrat revêtu à de la chaleur pour que la composition de revêtement fonde et s'écoule à une température comprise entre 60 °C et 180 °C ; puis
d. durcir à l'état fondu avec de l'énergie de rayonnement et/ou thermique.

9. Substrat revêtu avec la composition selon la revendication 5 ou la revendication 6.

10. Utilisation de l'oligomère ou polymère cristallin ou semi-cristallin selon l'une quelconque des revendications 1 à 4 dans une composition de revêtement en poudre.

11. Utilisation de la composition selon la revendication 5 ou la revendication 6 pour revêtir des substrats sensibles à la chaleur ou résistants à la chaleur, ou des substrats rigides ou souples, ou des substrats souples et sensibles à la chaleur.

12. Utilisation d'une composition selon la revendication 11 pour revêtir du cuir, du cuir artificiel, du textile, du plastique, du papier, du carton, du bois, des composites de bois, du panneau de particules, du panneau de fibres haute, moyenne ou basse densité, du fil métallique, du caoutchouc ou des matériaux de type caoutchouc.

Figure 1: A leather sample finished with a UV-curable powder coating based on polyurethane acrylate resin.

Mole fraction of monomer A in the mixture
of monomers A and B (%)

Figure 2: The effect of the content of monomer A on the crystallinity of PU acrylate resins (Example 1), before (□) and after (■) UV-curing. The total mole fraction of monomers A and B in the diols is kept constant at 40%.

Figure 3: The effect of the content of monomer A on the melting point of PU acrylate resins (Example 1), before (□) and after (▣) UV-curing. The total mole fraction of monomers A and B in the diols is kept constant at 40%.

Figure 4: The effect of the content of monomer A on the crystallinity of PU acrylate resins (Example 2), before (□) and after (▣) UV-curing. The total mole fraction of monomers A and B in the diols is kept constant at 40%.

Figure 5: The effect of the content of monomer A on the melting point of PU acrylate resins (Example 2), before (□) and after (◙) UV-curing. The total mole fraction of monomers A and B in the diols is kept constant at 40%.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 2542191
- EP 0636669 A
- US 4129488 A
- US 4163810 A
- US 5922473 A
- US 6005017 A
- US 6017640 A
- US 6106905 A
- US 6790876 B
- US 6541535 B
- US 5763099 A
- US 5811198 A
- US 6136882 A
- US 6747070 B
- US 6525161 B
- EP 0371528 B
- US 3210327 A

### Non-patent literature cited in the description

- **MISEV, T.A.** Powder Coatings. John Wiley and Sons Ltd, 1991
- **HOWARD, J.** *Surface Coating International,* 1995, 417
- **W.J. MACKNIGHT ; M. YANG ; T. KAJIYAMA.** *ACS Polym. Preprints,* 1968, vol. 9, 860-865
- **D. COUVRET ; J. BROSSE ; S. CHEVALIER ; J. SENET.** *Eur. Polym. J.,* 1991, vol. 27 (2), 193